(19)

Europäisches
Patentamt
European
Patent Office
Office européen
des brevets

(11) **EP 3 792 855 A1**

(12) **EUROPEAN PATENT APPLICATION**

(43) Date of publication:
**17.03.2021 Bulletin 2021/11**

(51) Int Cl.:
**G06Q 20/02** *(2012.01)*      **G06Q 20/40** *(2012.01)*

(21) Application number: **19197048.2**

(22) Date of filing: **12.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ETH Zurich**
**8092 Zurich (CH)**

(72) Inventors:
• **CAPKUN, Srdjan**
  **8049 Zürich (CH)**
• **DHAR, Aritra**
  **8008 Zürich (CH)**
• **KOSTIAINEN, Kari**
  **8053 Zürich (CH)**
• **WÜST, Karl**
  **8008 Zürich (CH)**
• **MAVROUDIS, Vasilleios**
  **London, WC1N2AB (GB)**

(54) **A METHOD AND SYSTEM FOR EXECUTING FAST AND SAFE TRANSACTIONS INVOLVING A HIGH-LATENCY BLOCKCHAIN**

(57)     A method for executing transactions in a system including a decentralized blockchain ($BC$) operable as a ledger for storing transactions ($\tau$) between a merchant ($m$) and a customer ($c$), comprising following steps:
a customer device causes a customer collateral ($col_c$) to be controlled by smart contract executed by a storage and computational module operable as an Arbiter;
the customer device sends an intent ($INTc$) to a merchant device,
the customer collateral ($col_c$) of the customer is verified, only if the verification is positive, the transaction is executed by the merchant device before the transaction corresponding to the intent is stored in said blockchain
the customer device sends to said Arbiter a transaction corresponding to said intent,
the merchant device stores the accepted transaction to said blockchain,
the smart contract is executed to trigger a transfer of the value of the transaction to the merchant once the transaction is added to the blockchain ($BC$) respectively to recover that value from the customer's collateral ($col_c$) if a pending transaction does not get stored on the blockchain.

Fig. 4

EP 3 792 855 A1

## Description

Field of the invention

The present invention concerns a method for executing transactions in a system including a blockchain, such as a high-latency blockchain.

The invention is also related to a method and protocol where blockchains, smart contracts and cryptographic services are used for executing a transaction in a communication network, wherein one of the parties to the transaction can execute the transaction safely without having to wait until the transaction is stored into the blockchain.

Description of related art

The use of blockchain as a decentralized, trusted and irrevocable ledger for transactions has already been considered in order to improve the safety of financial transactions over a telecommunication network. Cryptocurrencies based on permissionless blockchains have shown great potential in decentralizing the global financial system, reducing trust assumptions, increasing operational transparency and improving user privacy. However, this technology still has some significant limitations, preventing it from posing as valid alternative to established transaction means such as credit and debit card payments. One of the main problems of permissionless blockchains is high latency. For example, in the Ethereum blockchain, users have to wait approximately 3 minutes (10 blocks) before a new payment can be safely accepted. In comparison, traditional and centralized payment systems such as the ones used by major credit card operators can confirm payments within typically 2 seconds. High latency makes permissionless blockchains and other types of blockchains unsuitable for many important applications such as point-of-sale purchases and retail payments.

Faster blockchains have been actively studied over the last few years. Despite of many advances in permissionless consensus, such as sharding and Proof-of-Stake systems, latency in the order of centralized card payments still remains a distant goal for large-scale permissionless blockchains and other blockchains.

Thus, alternative methods are needed to enable fast payments using slow blockchains. Layer-2 solutions have been considered that move transaction processing off the chain and use the blockchain only for dispute resolution and occasional synchronization. However, such solutions have their own shortcomings. For example, payment channels enable two parties to send funds to each other off the chain, while adding only an opening and a closing transaction on the public ledger. With the opening transaction the two parties lock funds in the channel, which are then used throughout the lifetime of the channel. In cases where the two parties send approximately the same amount of fund to each other over time, a payment channel can enable almost indefinite number of near-instant payments. However, in the retail setting customers send funds unilaterally towards merchants. Moreover, customers transact with several merchants and thus each customer will need to maintain several channels and keep enough funds in each to cover future expenses. This complicates adoption, as a customer that visits k merchants and has an average expenditure of $e on each, will need to keep locked at least $k·e.

Payment networks attempt to tackle the problems of payment channels, by enabling parties to route their payments through other participants. For this purpose, they utilize the channels established between pairs of users to build longer paths. While this is a straightforward idea, in practice, finding routes reliably is not a trivial task. This is because the state of the individual channels changes arbitrarily over time and thus the capacity of the graph's edges fluctuate. Moreover, the unilateral nature of retail payments (i.e., customer → merchant) quickly depletes the available funds in the individual channels, thus preventing them from serving as intermediaries to route payments by other customers. It has been shown that even under favorable conditions (2.000 nodes, customers replenish their accounts every 10 seconds, maximum expenditure of $20, no attacks), approximately 2% of the payments will fail. At peak hours the ability of the network to route payments from customers to merchants is expected to degrade even further.

Payment hubs are a natural evolution of payment networks, aiming to address the uncertainty of payment networks by introducing a single central point connecting all customers to all merchants. This eliminates the need of finding routing paths and in theory require a smaller total amount of locked funds for the customers. However, this approach comes with two main drawbacks. First, it introduces a single central point on top of a fully decentralized blockchain. And second, the hub operator needs to deposit very large amount of funds to match the total expenditure of all customers and thus will likely charge service fees. For instance, a hub that serves n = 1, 000, 000 customers that have in total $250M Million dollars in their channels, should maintain a similar amount locked in channels with merchants to be able to accommodate payments, in particular during peak hours. This entails significant opportunity cost that the hub operator will seek to recover through fees.

Side-chains use a permissioned set of collectively trusted validators to track pending transactions, typically using a BFT consensus protocol. Such solutions change the trust assumptions of permissionless blockchains significantly, as BFT consensus requires that 2/3 of the validators must be trusted to behave honestly. Side chains have also performance and scalability issues, as they require multiple rounds of communication and have high message complexity.

Probabilistic payments such as MICROPAY1/2/3 can in certain scenarios enable efficient and fast payment approval. However, such solutions require that the service provided is continuous and granular so that the payments' probabilistic variance becomes negligible. In retail payments, this provides no guarantee that the merchant will be paid the right amount.

Brief summary of the invention

It is therefore an aim of the present invention to propose a new method for executing a transaction in a communication network, wherein one of the parties to the transaction can execute the transaction safely without having to wait until the transaction is stored into the blockchain.

An aim of the invention is to propose a method that enables fast and safe payments without trusted parties.

An aim of the present invention is also to propose a method that enables fast payments on high-latency blockchains, including for example permissionless blockchains.

An aim of the invention is to propose a method in which the merchants are guaranteed to receive the full value of all accepted payments, under any possible combination of double spending attack by malicious customers and equivocation by colluding statekeepers.

An aim of the invention is to propose a method in which the time for a merchant to achieve certainty that he will be paid is not dependent on the latency of the blockchain.

According to the invention, these aims are achieved by means of a data processing and telecommunication system for executing transactions, wherein the system includes a decentralized blockchain operable as a ledger for storing transactions between a merchant and a customer, a plurality of customer devices and a plurality of merchant devices all operable to communicate over the communication system, and a storage and computational module operable as an Arbiter for executing smart contracts,

each customer devices being operable to cause a customer collateral to be controlled by said Arbiter,

each customer device being further operable to send an intent to a merchant device,

the merchant devices being programmed to execute the transaction after a verification of the customer collateral deposited by a customer having sent such an intent, but before the corresponding transaction is stored in said blockchain,

each customer device being further operable to send to said Arbiter a transaction,

the merchant devices being further arranged for storing accepted transactions to said blockchain,

the smart contract being programmed for forwarding the value of the transaction to the merchant once the transaction is added to the blockchain respectively for recovering that value from the customer's collateral if a pending transaction does not get stored on the blockchain.

The system relies on new software in the customer device, in the merchant device, and in the storage and computational module in order to be operable as required by the claim. The system also requires a new smart contract, i.e., a new software, in order to control the customer collateral and ensure that the transaction will be executed as requested. The system further involves a new protocol for the sending, the transmission, the reception and the execution of various transactions that are exchanged in a telecommunication network or stored in the different devices.

The system may use customer collaterals that enable merchants to safely accept payments before the transaction has reached finality in the blockchain. The collaterals serve as payment guarantees and are deposited by customers to a smart contract during system enrolment. The collaterals may be represented by data blocks that may be transmitted or stored in a digital communication system. In one embodiment, the collaterals may be represented by cryptocurrencies.

The system thus offers the advantage that a merchant can supply the goods or services corresponding to the transaction after a verification of the intent received from a customer. The intent nmay be a digital message. The verification of the intent can be performed quickly and without having to wait for the actual transaction to be stored into the blockchain.

If the transaction corresponding to an accepted payment does not appear in the blockchain within a reasonable time, for example in case of double-spending attack, the victim merchant can recoup the lost funds from the malicious customer's collaterals.

As will be described, an additional safety can be achieved if each merchant device deposits a merchant collateral (cols) to an account controlled by the Arbiter. This merchant collateral can be used to protect a merchant against other malicious merchants. The merchant collateral may be represented by a digital block, for example by a cryptocurrency.

In another embodiment, a single centralized statekeeper protect each merchant against other malicious merchants.

In another embodiment, at least some of the statekeeper are known entity, such as registered companies for example. In that case, a victim merchant can go legally after them in case of fraud, so that a collateral is not required, or only a reduced collateral.

Each merchant device may be operable to forward the intent to a plurality of statekeeper devices. Each statekeeper device may compare said intent with previously received intents, and approves the intent only if no intent with the same index is found. Therefore, an early detection of double spending attempts can be performed by asking all or at least a majority of the statekeepers and without having to wait for the blockchain to be updated.

The method thus prevents double-spending within the system e.g., double spending towards two merchants participating in the system.

The merchant device may be arranged for verifying replies received from the statekeepers.

The merchant device may be arranged for executing the transaction, for example by supplying the ordered goods or services to the customer, if a majority of statekeeper devices have approved the transaction; otherwise, the merchant may abort the transaction.

According to another aspect, the invention is related to a method for executing transactions in a system including a blockchain operable as a ledger for storing transactions between a merchant and a customer, comprising following steps:

a customer device causes a customer collateral to be controlled by smart contract executed by a storage and computational module operable as an Arbiter;
the customer device sends an intent to a merchant device,
the customer collateral of the customer is verified,
only if the verification is positive, the transaction is executed by the merchant device before the transaction corresponding to the intent is stored in said blockchain
the customer device sends to said Arbiter a transaction corresponding to said intent,

the merchant device stores the accepted transaction to said blockchain,
the smart contract is executed to trigger a transfer of the value of the transaction to the merchant once the transaction is added to the blockchain respectively to recover that value from the customer's collateral if a pending transaction does not get stored on the blockchain.

The method thus enables safe acceptance of fast (zero-confirmation) on-chain payments on slow blockchains that support smart contracts.

The method involves a new protocol of communication between the various devices that are involved.

The smart contract is a piece of software stored in the blockchain whose execution is triggered by the previous events in the protocol, and which triggers other events such as a transfer of value, for example digital cryptocurrencies, from the customer or from the customer's collateral.

The method is well adapted to retail payments.

The method can also be used in any scenario where a large number of users (e.g., 100,000 customers) make payments towards a moderate set of recipients (e.g., 100 merchants).

Merchants who use the method need to communicate to be able to accept fast-payments safely, but neither the merchants nor the customers have to trust each other.

The customer's deposit preferably cover the value of the customer's purchases within the latency period of the blockchain (e.g., 3 minutes in Ethereum) which makes them small in practice. Unlike in previous Layer-2 solutions, a single collateral can be used to shop with many merchants. Moreover, customers do not need to repeatedly replenish their collaterals, as they are used only in the case of attack.

In one preferred embodiment, the collaterals cover all of the authorized customer's purchases.

In another embodiment, at least some customers, for example customers with good reputation or who have been honest for years, are allowed to spend more than their collaterals.

In one embodiment, the payment recipients (merchants) act as untrusted statekeepers whose task is to track and collectively approve incoming transactions.

In another embodiment, merchants and statekeepers are separate entities.

To initiate a fast payment, a customer creates a transaction that transfers funds to an Arbiter controlling a smart contract; the smart contract indicates the merchant as beneficiary.

The recipient merchant sends the transaction to the statekeepers and proceeds with the sale only if a majority of them approves it with their signatures. Upon collecting the required signatures, the merchant stores the transaction in the blockchain network to be processed by an Arbiter smart contract. Once the transaction is processed and logged by the Arbiter, the payment value is forwarded to the merchant.

Statekeepers must also deposit collaterals that protect merchants from attacks where a malicious statekeeper colludes with a customer. In such a case, the victim merchant can use the statekeeper's approval signatures as evidence to claim any lost funds from the misbehaving statekeeper's collateral. The size of statekeeper collateral is proportional to the total amount of purchases that all participating merchants expect within the blockchain latency period. Crucially, the statekeeper collaterals are independent of the number of customers which allows the system to scale to large deployments. The main security benefit of statekeeper collaterals is that they enable fast and safe payments without trusted parties.

It can be demonstrated that a merchant who follows the method and accepts a fast payment once it has been approved by the majority of the statekeepers never loses funds regardless of any combination of customer and statekeeper collusion.

The method is practical to deploy on top of existing blockchains by implementing it on Ethereum. The performance of our solution depends primarily on number of participating statekeepers (merchants). For example, assuming a deployment with 100 statekeepers, a payment can be approved in less than 200 ms with a processing cost of $0.16 (169k Ethereum gas), which compares favorably to card payment fees.

The proposed method overcomes some problems of Layer-2 solutions in application scenarios such as retail payments. In contrast to BFT side-chains that assume that 2/3 honest validators and require multiple rounds of communication, the method requires no trusted validators and needs only one round of communication.

Unlike payment channels, the method enables payments towards many merchants with a single and small customer deposit.

In contrast to payment networks, the payments performed with the method can always reach the merchants, because there is no route depletion. And finally, the statekeeping collaterals are practical even for larger deployments, compared to those in payment hubs, as they are independent of the number of customers in the system.

Another advantage of the method and system is that the time for a merchant to achieve certainty he will be paid is not dependent on the latency of the blockchain

Another advantage of the method is that the collaterals that need to be deposited by each user remain practical even when the system scales for large number of customers or many merchants. In particular, the customer collaterals depend on their own spending, not on the number of merchants. The entities that operate the system (the merchants) should deposit an amount that is proportional to their sales, not the number of customers.

Another advantage is the method is that if it is deployed on top of an existing blockchain system, such as Ethereum, the payment processing remains inexpensive.

The invention will be better understood with the aid of the description of an embodiment given by way of example and illustrated by the figures, in which:

Fig. 1 shows an example of a system according to the invention.

Fig. 2a illustrates how customers and merchants deposit collaterals to an Arbiter smart contract during registration.

Fig. 2b illustrates a payment made by a customer to merchant through the Arbiter smart contract.

Fig. 2c illustrates how a victim merchant can recover any losses from the arbiter in case of attack.

Fig. 3 illustrates an example of system where each merchant operates as statekeeper; customers make payment towards merchants who consult a majority of the statekeepers before accepting them.

Fig. 4 illustrates a payment approval protocol, where a customer initiates a payment to a merchant m who requests a majority approval from the statekeeprs. The merchant then aggregates the received responses and forwards them back to the customer who creates and broadcasts the final transaction transferring the to the merchant.

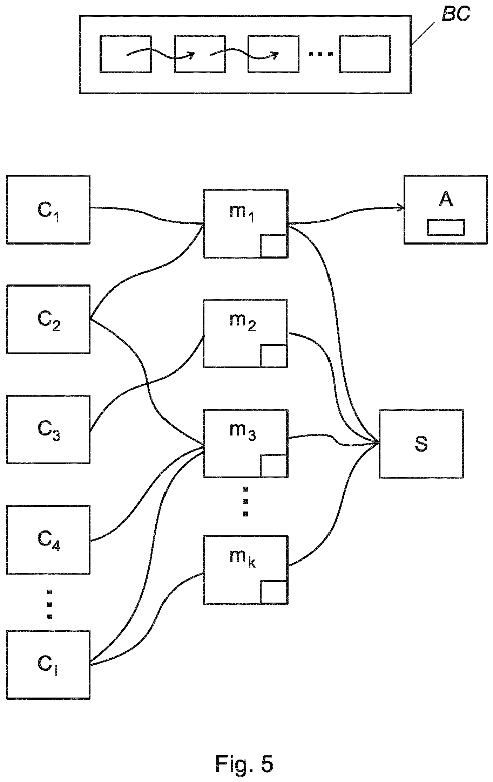

Fig. 5 illustrates another example of system with one central and single statekeeper.

Fig. 6 illustrates a moving majority attack that enables a customer to have two transactions with the same index value approved by disjoint statekeeper majorities.

Detailed Description of possible embodiments of the Invention

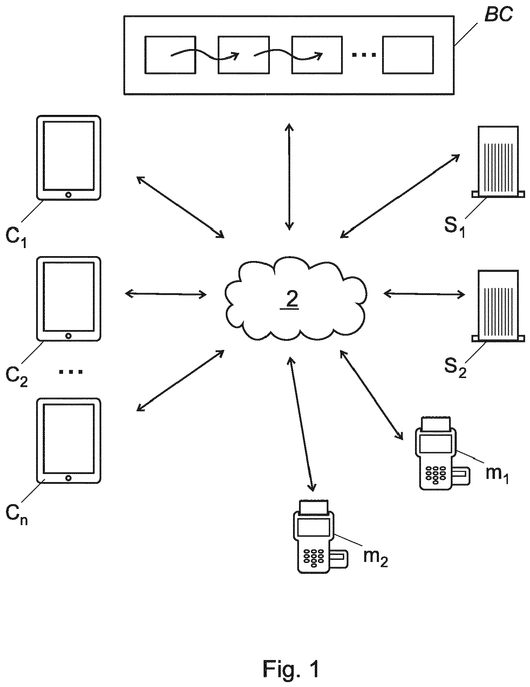

An example of system in which the present invention can be used is illustrated on Fig. 1. It comprises a plurality of customer devices c1-cn, such as for example smartphones, tablets, personal computer, etc.. A single customer can log in a plurality of devices with the same identity; each of those different devices will be referred to as the customer device.

The system further comprises a plurality of merchant devices m1, m2, .., such as for example point-of-sale devices, terminals, smartphones, computers, tablets, servers etc. A merchant can log in a plurality of devices with the same identity; each of those different devices will be referred to as the merchant device.

The system may also comprise one or a plurality of statekeeper devices S1, S2, .. such as for example personal computers, servers, etc. One or a plurality of statekeeper devices may be combined with one or a plurality of merchant devices.

Each customer device, each merchant device and each statekeeper device comprises at least one processor and a memory storing data and a software module, such as a program or an app, that causes the processor to execute the various steps performed by the device in the following description. The devices also comprise a communication module for sending and/or receiving communication with at least some other devices in the system. Some of the devices may also comprise a cryptographic module for signing and/or encrypting messages and communications with the other devices.

At least some of the device may also access a blockchain *BC* in order to store or read transactions, including for example financial transactions. The blockchain may also store and execute software representing smart contracts, and act as a storage and computational module for those smart contracts. As will be described, one smart contract stored in the block chain may be used as an Arbiter in the method of the invention.

Customers and merchants.

The method is adapted to settings where n customers send payments to k merchants such that n is large and k is moderate. One example scenario is a flea market where n = 100, 000 customers purchase goods at k = 100 small merchants. Another example is k = 100 larger retail stores with a customer base of n = 1, 000, 000.

We consider merchants who accept no risk, i.e., they hand the purchased products or services to the customers, only if they are guaranteed to receive the full value of their sale.

We assume asynchronous communication between the customers devices and the merchant devices.

Blockchain.

The method is adapted to a blockchain that has good throughput, but high latency. The blockchain supports smart contracts, i.e., interpret or execute programs in any programming language that is expressive enough to implement the protocol of the Arbiter.

In one example, the method uses the Ethereum blockchain, although the method is compatible with most blockchains with smart contracts. To ensure compatibility with existing systems like Ethereum, smart contracts needs to have access to the current state of the blockchain. Access to past states is not required.

Adversary.

The method may be used even in situation where an adversary controls an arbitrary number of customers and all other merchants besides the target merchant who accepts a fast payment. The adversary may also control the network connections between customers and merchants but cannot launch network-level attacks such as node eclipsing. The adversary cannot violate the consensus guarantees of the blockchain, prevent smart contract execution, or violate contract execution integrity.

Overview

According to one aspect, customer collaterals are held by a smart contract stored in and executed by the Blockchain. This smart contract is called Arbiter and enable merchants to safely accept payments before a transaction reaches finality on the chain. If a pending transaction does not get confirmed on the chain (for example in case of double spending attack), the victim merchant can recover the lost funds from the customer's collateral.

A payment guarantee is obtained if the total value of a customer's pending transactions never exceeds the value of its collateral. This invariant is easy to ensure in a single-merchant setup by keeping track of the customers' pending transactions. However, in a retail setting with many merchants, each individual merchant device does not have a complete view of each customer's pending payments, as each customer can perform purchases with several different merchants simultaneously.

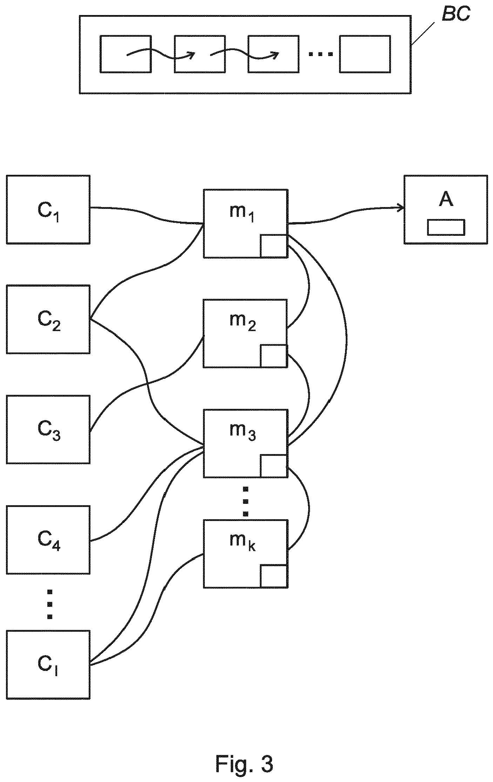

A possibility to address this problem is to assume that the merchant devices collaborate and collectively track pending transactions from all customers devices (see Figure 3). Below, we outline simple approaches to realize such collaboration and point out their drawbacks that motivate our solution.

Transaction broadcasting

A simple approach would be to require that all merchant devices broadcast all incoming payments, so that everyone can keep track of the pending transactions from each customer. Such a solution would prevent customers from exceeding their collateral's value, but assumes that all the merchants are honest. A malicious merchant, colluding with a customer, could mislead others by simply not reporting some of the customer's pending payments. The customer can then double spend on all of its pending transactions, thus enabling the colluding merchant to deplete its collateral and prevent other merchants from recovering their losses. The same problem would arise also in cases where a benign merchant fails to communicate with some of the merchants (e.g., due to a temporary network issue) or if the adversary drops packets sent between merchants.

Such transaction broadcasting might be applicable in specific settings (e.g., large retailers that trust each other and are connected via high-availability links), but it fails to protect mutually-distrusting merchants such as small shops or restaurants, and is unsuited to scenarios where mutually- trusting merchants cannot establish links.

Unanimous approval.

Alternatively, merchant devices could send each incoming transaction to all other merchant devices and wait until each of them responds with a signed approval. While some of the merchants may act maliciously and equivocate, rational merchants holding pending transactions from the same customer will not, as this would put their own payments at risk. The Arbiter contract would refuse to process any claims for losses, unless the merchant can provide approval statements from all other merchants. Such unanimous approval prevents the previous attack (assuming rational actors), but it suffers from poor liveness. Even if just one of the merchants is unreachable, the system cannot process payments.

BFT consensus.

A common way to address such availability concerns is to use Byzantine-fault tolerant protocols. For example, the merchants could use a BFT consensus to stay up to date with all the pending payments. Such a solution can tolerate up to 1/3 faulty (e.g., non-responsive) merchants and thus provides increased availability compared to the previous design. However, this solution has all the limitations of side-chains. In particular, BFT consensus requires 2/3 trusted validators and several rounds of communication. Therefore, BFT side-chains are not ideal even in the case of mutually-trusting merchants.

Proposed method

According to one aspect, in order to overcome the problems of the above methods, one preferably uses two primary techniques, (a) majority approval and (b) merchant collaterals, in such a way that fast payments can be accepted safely despite of untrusted merchants. Additionally, payment approval is possible even when several merchants are unreachable.

The use of majority approval generates non-deniable evidence about potentially misbehaving merchants. Together with merchant collaterals, this enables attack victims to recover their losses, in case a merchant colludes with a malicious customer. In an example attack, a malicious customer sends transaction $\tau$ to a victim merchant and $\tau'$ to a colluding merchant, and simultaneously double spends both $\tau$ and $\tau'$. The colluding merchant claims the lost value from the customer's collateral which exhausts it and prevents the victim merchant from recovering losses from the customer's collateral. However, the victim can use the colluding merchant's signature from the majority approval process as evidence and reclaim the lost funds from the merchant's collateral.

Collaterals.

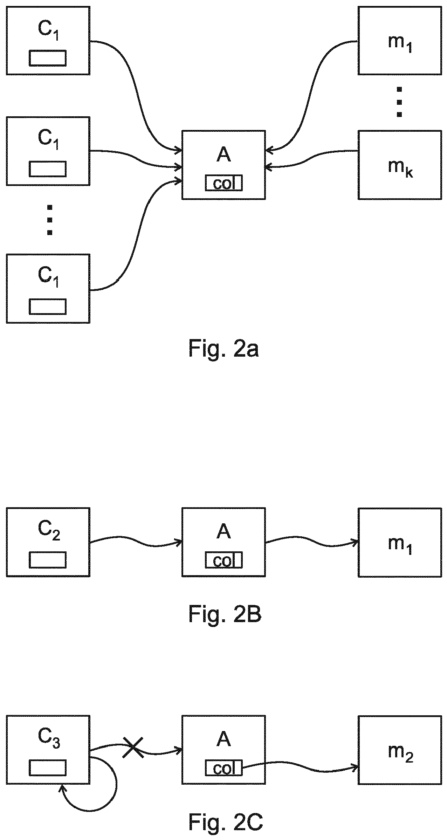

To register in the system, each customer deposits a collateral to Arbiter's account (see Figure 2a). This can be performed for example by triggering a transfer of cryptocurrencies between a wallet of the customer device to a wallet controlled by the smart contract.

The value of the collateral is determined by the customer, and it should suffice to cover its expenditure $e_t$ during the blockchain latency period (e.g., $e_t$ = $100 for 3 minutes in Ethereum).

Since merchants are untrusted, they also need to deposit a collateral. Again, this can be performed for example by triggering a transfer of cryptocurrencies between a wallet of the merchant device to a wallet controlled by the Arbiter, i.e., the device or module executing the smart contract.

The size of the merchant collateral depends on the total value of sales that all participating merchants process within the latency period. For example, for a consortium of k = 100 flea market stalls that process $p_t$ = 6 payments of $e_t$ = $5 on average during the latency period, a collateral of $3,000 will suffice.

In another embodiment, at least some of the merchant are known entity, such as registered companies for example. In that case, a victim merchant can go legally after them in case of fraud, so that a collateral is not required, or only a reduced collateral.

Payment approval

After registering, a customer device can initiate a payment by sending a payment intent to a merchant device together with a list of its previous approved but not yet finalized transactions. The payment intent may be a digital message that may be signed by the customer device.

The merchant device can verify that the provided list is complete, by examining index values that are part of each transaction. If the total value of intended payment and the previously approved payments do not exceed the value of the customer's collateral, the merchant device proceeds.

To protect himself against conflicting transactions sent to other merchants simultaneous, the merchant device collects approval signatures from more than half of the participating merchant devices. Such majority approval does not prevent malicious merchants from falsely accepting payments, but it provides undeniable evidence of such misbehavior that the merchant can later use to recover losses in case of an attack. The merchant who is about to accept a payment also verifies that the approving merchants have each sufficient collateral left in the system to cover the approved payment. Once these checks are complete, the merchant can safely accept the payment.

A payment from a customer device is initially routed to the account controlled by the Arbiter that logs the approval details into its state and after that forwards the payment value to the account of the receiving merchant device (see "Payment" in Figure 2b (left)). Since all payments are preferably routed through the Arbiter contract, this enables the Arbiter to perform claim settlement in blockchain systems like Ethereum where smart contracts do not have perfect visibility to all past transactions. If blockchain systems offer better transaction visibility to past transactions for contracts, payments can be also routed directly from the customers to the merchants.

Settlements.

If the transaction does not appear in the blockchain after a reasonable delay (for example while a double-spending attack took place), the victim merchant can initiate a settlement process with the arbiter to recover the lost funds (Figure 2c). The Arbiter uses the logged approval evidence from its state to determine who is responsible for the attack, and it returns the lost funds to the victim merchant either from the collateral of the customer or the misbehaving merchant who issued false approval.

It could also be that a customer double spend outside of the system. In any case, the victim merchant and he Arbiter can easily discover who's fault it is (i.e., the customer's or one the statekeepers) as the conflicting transaction will be on the blockchain.

Separation of statekeeping.

So far, we have assumed that payment approval requires signatures from merchant devices who track pending transactions. However, for generality and separation of duties, we decouple the tracking and approval task of merchants into a separate role that we call statekeeper. When there are an identical number of merchants and statekeepers, the value of statekeepers' collaterals is determined as already explained for merchant collaterals.

More detailed description

In this section, we describe the method in detail. We instantiate it for Ethereum, but emphasize that the invention is not limited to this particular blockchain. We start with background on aggregate signatures, followed by data structures, registration, payment and settlement protocols.

Table 1: **Snappy transaction $\tau$ format.** All Snappy-specific information is encoded into the Data field of Ethereum transactions.

| Field | Symbol | Type | Description |
|---|---|---|---|
| *To* | $\tau_{to}$ | 160-bit | Arbite rs addr |
| *From* | $\tau_f$ | 160-bit | Customer's addr |
| *Value* | $\tau_v$ | Integer | Transferred funds |
| *ECDSA Sig.* | *v,r,s* | 256-bits | Tx signature triplet. |
| *Data* | | | |
| ↳ *Operation* | $\tau_{op}$ | String | e.g., "Pay", "Claim" |
| ↳ *Merchant* | $\tau_m$ | 160-bit | Merchant's address |
| ↳ *Payment Index* | $\tau_i$ | Integer | Monotonic counter |
| ↳ *Signatures* | $\tau_A$ | 512-bits | Aggregate signature |

(continued)

| Field | Symbol | Type | Description |
|-------|--------|------|-------------|
| ↳ Quorum | $\tau_q$ | 256-bits | Approving parties |

### Background on BLS Signatures

Transactions are preferably signed with the Boneh- Lynn-Shacham (BLS) Signature Scheme. BLS signatures are built on top of a bilinear group and a cryptographic hash function
$H\{0, 1\}^* \to G$

A bilinear group bp = (p, G, H, $G_T$, $e$, $g$, $h$) consists of cyclic groups G, H, $G_T$ of prime order p, generators $g$, $h$ that generate G and H respectively, and a bilinear map $e : G \times H \to G_T$ such that: The map is bilinear, i.e., for all $u \in$ G and $v \in$ H and for all $a, b \in Z_p$ we have $e(u^a, v^b) = e(u, v)^{ab}$; The map is non-degenerate, i.e., if e(u, v) = 1 then u = 1 or v = 1. There are efficient algorithms for computing group operations, evaluating the bilinear map, deciding membership of the groups, and sampling generators of the groups.

The main operations are defined as follows:

- Key generation: A private key $x_j$ sampled from $Z_p$, and the public key is set as $v_j = h^{x_j}$. A zero-knowledge proof of knowledge for $x_j$ can be generated using a Fischlin transformed sigma protocol or by signing the public key with its private counterpart.

- Signing: Given a message $m$, the prover computes a signature as $\sigma_j = H(m)^{x_j}$.

- Aggregation: Given message m and signatures $\sigma_1, \ldots, \sigma_n$, an aggregated signature $A$ is computed as

$$A = \prod_{j=1}^{n} \sigma_j$$

- Verification: The verifier considers an aggregated signature to be valid if

$$e(A, h) = e\left(H(m), \prod_{j=1}^{n} v_j\right)$$

### Data Structures

### Transactions.

In one embodiment, all interaction with the Arbiter smart contract are conducted through Ethereum transactions. The required-specific information is encoded in the to Data field, as shown in Table 1. Each transaction $\tau$ carries an identifier of the operation type $\tau_{op}$ (e.g., "Payment", "Registration", "Claim"). Moreover, transactions marked as "Payments" also include the address of the transacting merchant $\tau_m$, a monotonically increasing payment index $\tau_i$, an aggregate $\tau_A$ of the statekeepers' approval signatures, and a vector of bits $\tau_q$ indicating which statekeepers contributed to the aggregate signature. $\tau_v$ denotes the amount of funds in $\tau$.

### Arbiter state.

The Arbiter maintains state, shown in Table 2, that consist of the following items: a Customers dictionary $C$ that maps customer public keys to their deposited collateral $col_c$, a clearance index $cl$, and a dictionary $D$ of finalized transactions. $D$ maps transaction index values to tuples that contain the hash of the transaction H($\tau$), $\tau_A$, $\tau_q$, and a bit $b$ indicating whether the signature has been verified. Additionally, the Arbiter maintains a merchants dictionary $M$ containing the public keys of each registered merchant. The statekeepers dictionary $S$ maps the statekeeper public keys to a tuple with their collateral $col_s$ and a vector $d$ indicating how $col_s$ is distributed between the merchants (by default, evenly).

Table 2: **Arbiter's state.** The arbiter smart contract maintains a record for each customer, merchant and statekeeper.

| Field | Symbol | Description |
|---|---|---|
| *Customers* | $C$ | Customers. |
| ↳ *entry* | $C[c]$ | Customer $c$ entry |
| ↳ *Collateral* | $C[c].col_c$ | Customer's collateral |
| ↳ *Clearance* | $C[c].cl$ | Clearance index |
| ↳ *Finalized* | $C[c].D$ | Finalized Transactions |
| ↳ *entry* | $C[c].D[i]$ | Entry for index $i$ |
| ↳ *Hash* | $C[c].D[i].H(\tau)$ | Tx Hash |
| ↳ *Signatures* | $C[c].D[i].\tau_A$ | Aggregate signature |
| ↳ *Quorum* | $C[c].D[i].\tau_q$ | Approving parties |
| ↳ *Bit* | $C[c].D[i].b$ | Sig. verified flag |
| *Merchants* | $M$ | Merchants |
| ↳ *entry* | $M[m]$ | Merchant $m$ entry |
| *Stotekeepers* | $S$ | Slatekeepers |
| ↳ *entry* | $S[s]$ | Slatekeeper $s$ entry |
| ↳ *Allocation* | $S[s].col_s[m]$ | Value per merchant |

Customer state.

Each customer device c maintains an ordered list $L$ stored in a memory portion and updated with a suitable software module, with its past approved transactions. We denote Sc the subset of those transactions form L that are still pending inclusion in the blockchain (Sc $\subseteq$ $L$).

Statekeeper state.

Each statekeeper maintains a list $P$ of all the payment intents it has approved for each customer $c$. The list $P$ is stored in a memory portion of the statekeeper device and updated with a suitable software module.

Merchant state.

Each merchant maintains a table $R[s]$ indicating how much collateral of each statekeeper s it can claim. Initially, $R[s] = col_s/k$ for each statekeeper. The table is stored in a memory portion of the merchant device and updated with a suitable software module.

Registration

Customers can join and leave the system at any time. In this embodiment, the set of merchants and statekeepers is fixed after initialization. Another embodiment can be considered in which statekeeper and/or merchants are added or removed after initialization.

Merchant registration.

Merchant $m$ submits a registration request which is a transaction that calls a function of the Arbiter contract. Once executed, the Arbiter adds a new entry $M[m]$ to its state, where $m = \tau_f$ is the merchant's account address (public key).

Customer registration.

Customer device c sends a transaction to the Arbiter with the funds that it indents to deposit for its collateral $col_c$. The Arbiter contract creates a new customer entry $C[c]$, sets the customer's collateral to $\tau_v$, and initializes the clearance index to $cl = 0$. The Arbiter also initializes a new dictionary $C[c].D$ to log the registered customer's payments.

Statekeeper registration.

The registration process for statekeepers is similar to that of customers devices. However, a statekeeper's registration includes also a proof of knowledge for their BLS private key $x_j$ to prevent rogue key attacks. The proof is included in the data field of the registration transaction and is verified by the Arbiter. Additionally, the statekeeper may also define how its collateral is to be distributed between the merchants. The maximum value each merchant can claim is *S[s].d*. We consider the case where each statekeeper collateral $col_s$ is equally allocated between all k merchants, and thus each merchant can recoup losses up to $col_s$/k from statekeeper *s*.

Payment Approval

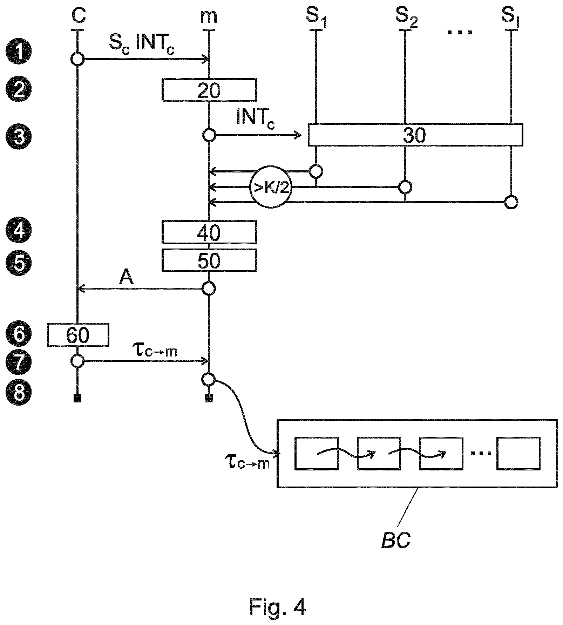

The payment-approval protocol proceeds as follows (Figure 4):

1 - Payment initialization. To initiate a payment, customer device *c* creates a payment intent $INT_c$ and sends it as a digital message to merchant device *m*, together its state *Sc* that contains a list of already approved but still pending payments. The intent carries all the details of the payment (e.g., sender, recipient, amount, index) and has the same structure as normal transaction, but without the signatures that would make it a complete valid transaction.

2 - Customer evaluation. Upon reception, merchant device *m* checks during step 20 that all the index values in the interval {1 ... $INT_c$ [i]} appear either in the blockchain *BC* as finalized transactions or in $S_c$ as approved but pending transactions. If this check is successful, *m* proceeds to verify that $col_c$ suffices to compensate all of the currently pending transactions of that customer (i.e., $col_c \geq \sum S_c + INT_c$ [v]). Finally, merchant *m* verifies the approval signatures of the customer's transactions both in $S_c$ and in the blockchain.

3 - Payment approval. Next, the payment intent must be approved by a majority of the statekeepers devices. The merchant device forwards $INT_c$ to a majority or all statekeepers device, who individually compare it during step 30 with payment intents they have approved in the past (list in their state). If no intent with the same index $\tau_i$ is found, statekeeper device s appends $INT_c$ in its list *P*, computes a BLS signature $\sigma_s$ over $INT_c$, and sends $\sigma_s$ back to the merchant device. If the statekeeper device finds a past approved intent from c with the same index value, it aborts and notifies the merchant device.

4 - Statekeeper evaluation. Upon receiving the approval signatures from a majority of the statekeepers, merchant device *m* uses R[s] to check during step 40 that each approving statekeeper s has sufficient collateral remaining to cover the current payment value $\tau_v$. In particular, the merchant device verifies that none of the approving statekeepers have previously approved pending payments, whose sum together with the current payment exceeds R[s]. Recall that initially *R[s]* is set to $col_s$/k for each statekeeper, but in case *m* has filed a settlement claims in the past against *s*, the remaining collateral allocated for *m* may have been reduced. This check ensures that in case one or more statekeepers equivocate, *m* is able to recover its losses in full.

5 - Signature aggregation. If the statekeepers evaluation succeeds, *m* aggregates during step 50 the approval signatures $\sigma 1,..., \sigma_{[(\kappa+1)/2]}$ and sends to customer device *c* the resulting aggregate A and a bit vector q indicating which statekeepers' signatures were included in A. Otherwise, if one or more statekeepers do not have sufficient collateral to approve $INT_c$, the merchant device can either contact additional statekeepers devices or abort.

6 - Transaction finalization. The customer device signs and returns to the merchant device *m* a transaction $\tau$ with the details of $INT_c$, as well as $\tau_{to}$ = Arbiter, $\tau_m$ = *m*, $\tau_A$ = A and $\tau_q$ = q (step 60).

7 - Payment acceptance. Merchant *m* first verifies the details and the signatures of the transaction $\tau$, and then hands over the purchased goods or service to the customer. Finally, *m* broadcasts *t* to the blockchain network.

8 - Payment logging. Once the transaction $\tau$ is added in a block of the blockchain, the Arbiter records the payment and forwards its value to merchant device *m* (Algorithm 1). To keep the payments inexpensive in Ethereum, our smart contract preferably does not verify the aggregate signature $\tau_A$ during logging. Instead, it performs the expensive signature verification only in cases of disputes, which are expected to be rare.

---

**Algorithm 1: Record-and-Forward.** Arbiter records the transaction and forwards the payment value to the merchant.

---

**Actor** : Arbiter (smart contract)
**Input** : Snappy transaction $\tau$
**Output** : None

1  $c \leftarrow \tau_f$
2  **if** $c \in C$ and $\tau_l \notin C[c].D$ **then**
3      $h \leftarrow H(\tau_f, \tau_{to}, \tau_v, \tau_i)$
4      $C[c].D[\tau_i] \leftarrow \langle h, \tau_A, \tau_q, 0 \rangle$
5      Send$(m, \tau_v)$                  ▷ Forward the tx's funds to merchant
6  **else**
7      Send$(s, \tau_v)$                  ▷ Return funds to sender

---

Claim Settlement

If a transaction does not appear in the blockchain within a reasonable time, the affected merchant may inspect the blockchain *BC* to determine the cause of the delay. There are three possible reasons for a transaction not getting included in the blockchain in a timely manner:

   1. Benign congestion. A transaction may be of lower priority for the miners compared to other transactions awarding higher miner fees.

   2. Conflicting transaction. Another transaction by the same customer device prevents the transaction from being included in the blockchain (doubles-pending attack). In Ethereum, two transactions from the same customer conflict when they share the same nonce value.

   3. Customer's account depletion. A recent transaction left insufficient funds in the customer's account. Ethereum processes the transactions of each customer in increasing nonce order, and thus transactions with greater nonce values may be invalidated by those preceding them.

In the first case, the merchant device must simply wait and check again later. In the latter two cases, the merchant can initiate a settlement claim to recoup the lost value $\tau_v$. Such claims are sent to the Arbiter and include: (1) the pending transaction $\tau_p$ for which the merchant requests settlement, (2) a list $T_p$ with all preceding (lower index) and pending transactions, and (3) optionally a list of conflicting transaction tuples Tcnfl. The merchant device can construct $T_p$ from the $S_c$ (received at payment initialization) by removing the transactions that are no longer pending.

Settlement overview.

Algorithm 2 describes how the Arbiter executes settlement. First, it checks the majority approval by verifying the BLS signature aggregate $\tau_A{}^p$. Then, it tries to recoup the transaction value $\tau_p$ from the customer's collateral using the Claim-Customer sub-routine. If the collateral does not suffice to cover the transaction value $\tau v$, it proceeds to claim the remaining amount from the collateral of the equivocating statekeeper using the Claim-Statekeeper sub-routine. Finally, the Arbiter smart contract logs $\tau$ so that no further claims from the customer's collateral can be made for the same index $\tau_i$.

---

**Algorithm 2: Claim-Settlement.** Arbiter processes settlement claim using customers' and statekeepers' collaterals.

---

**Actor** : Arbiter (smart contract)

**Input** : Pending transaction $\tau^p$

Ordered list of pending transactions $\mathbb{T}_p$

List of conflicting transaction tuples $\mathbb{T}_{cnfl}$ (optional)

**Output** : None

1  **if** $Verify(\tau_A^p)$ **then**
2    | $r \leftarrow$ Claim-Customer$(\tau^p, \mathbb{T}_p)$
3    | **if** $r > 0$ **then**
4    |  | Claim-Statekeeper$(\tau^p, \mathbb{T}_{cnfl}, r)$
5    | $c \leftarrow \tau_f^p$
6    | $C[c].D[\tau_i] \leftarrow \langle h, \tau_A, \tau_q, 1 \rangle$      ▷ Log tx as processed

---

Claim-Customer sub-routine is shown in Algorithm 3. First (lines 3-7), it verifies the signatures of preceding finalized transactions that have not been verified already (recall that signatures are not verified during Record-and-Forward to reduce payment processing cost). Subsequently, the contract checks that the list contains all the pending transactions preceding $\tau_p$ (lines 8-9) and verifies their signatures (lines 10-11). For every transaction that is deleted (line 7), the merchant device should have included another transaction with the same index and valid approval signature in 7rp. These two checks ensure that the merchant device did its due diligence and verified the approval signatures of preceding pending and non-pending transactions during "Customer evaluation" step.

---

**Algorithm 3: Claim-Customer.** Arbiter recovers lost funds from
the customer's collateral or returns the remaining amount.

---

| | | |
|---|---|---|
| **Actor** | : Arbiter (smart contract) | |
| **Input** | : Pending transaction $\tau^P$ | |
| | Preceding pending transactions $\mathbb{T}_p$ | |
| **Output** | : Residual $r$ or $\perp$ | |

1   $c \leftarrow \tau_f^P$

2   $I^* \leftarrow C[c].D$            ▷ Pass by reference

    /* Verify signatures of preceding non-pending txs. */

3   **for** $\forall\{i \in I^* | I^*[i].b = 0\}$ **do**

4      **if** $Verify(I^*[i]_A)$ **then**

5        $I[i].b \leftarrow 1$

6      **else**

7        del $I^*[i]$          ▷ Past tx had no approval.

    /* Any pending & preceding txs missing? */

8   **if** $\exists i \in \{1 \dots \tau_i\}$ *such that* $i \notin I^*$ *and* $i \notin \mathbb{T}_p$ **then**

9      **return** $\perp$

    /* Verify signatures of pending preceding txs. */

10   **if** $!Verify(\mathbb{T}_p)$ **then**

11      **return** $\perp$

    /* Process claim. */

12   **if** $\tau_i^P \notin I^*$ **then**

13      $col_c^* \leftarrow C[c].col_c$      ▷ Pass by reference

14      $cov \leftarrow max(0, col_c^* - \sum \mathbb{T}_p)$    ▷ Max claimable amount

15      $\rho \leftarrow min(cov, \tau_v^P)$

16      $col_c^* \leftarrow col_c^* - \rho$

17      $Send(\tau_m^P, \rho)$

18      $r \leftarrow \tau_v^P - \rho$

19      **return** $r$

20   **else**

21      **return** $\tau_v$          ▷ Statekeeper equivocated

---

After that, the contract checks for another valid transaction with the same index, and if there was it returns $\tau_v^P$ to its parent process (line 21). In this case, the losses should be claimed from the equivocating statekeepers' collaterals. Otherwise, the arbiter compensates the merchant from the customer's collateral $col_c$. In case the customer's collateral does not suffice to fully recoup $\tau_v^P$, then the algorithm returns the remaining amount (line 19). This amount is then used in further claims against the statekeepers.

The method supports arbitrarily many past transactions. However, in practice, an expiration window can be used to reduce the computational load of verifying the signatures of preceding transactions. For example, a 24-hour window would allow sufficient time to accept payments and claim settlements if needed, and at the same time keep the number of past-transaction verifications small. Such time window would also reduce the storage requirements of the Arbiter smart contract, as it would only need to store the most recent transactions from each user in C[c].D, instead of all the past transactions.

Claim-Statekeepers sub-routine is shown in Algorithm 4. It is executed in cases where the customer's collateral does not suffice to fully recoup the value of the transaction $\tau_p$ for which settlement is requested. In this case, the arbiter attempts to recover the lost funds from the equivocating statekeepers.

---

**Algorithm 4: Claim-Statekeeper.** Arbiter sends lost funds from the misbehaving statekeepers' collaterals to the affected merchant.

---

**Actor** : Arbiter (smart contract)

**Input** : Residual $r$

Pending Transaction $\tau^p$

Conflicting transaction tuples $\mathbb{T}_{cnfl}$

**Output** : None

1 $left \leftarrow r$

2 **while** $left > 0$ *and* $\mathbb{T}_{cnfl} \neq \emptyset$ **do**

3    $\langle \tau', \tau'' \rangle \leftarrow \mathbb{T}_{cnfl}.\text{pop}()$      ▷ Tuple of txs with the same idx

4    **if** $\text{Verify}(\tau')$ *and* $\text{Verify}(\tau'')$ *and*

5      $\tau'_i \leq \tau^p_i$ *and* $\tau''_i \leq \tau^p_i$ *and* $\tau' \neq \tau''$ **then**

6      $sk \leftarrow \text{FindOverlap}(\tau', \tau'')$      ▷ Find who equivocated

7      **if** $sk \neq \emptyset$ **then**

8        $\delta \leftarrow |\tau'_v - \tau''_v|$

9        $\overrightarrow{col}_{sk} \leftarrow S[sk].col_s k[\tau^p_m]$      ▷ Pass by reference

         /* Is there enough collateral left?     */

10        **if** $\overrightarrow{col}_{sk}[m] - \delta \geq 0$ **then**

11          $\overrightarrow{col}_{sk}[m] \leftarrow \overrightarrow{col}_{sk}[m] - \delta$

12        $left \leftarrow left - \delta$

13 $\rho \leftarrow min(\tau^p_v, |\tau^p_v - left|)$

14 $\text{Send}(\tau^p_m, \rho)$

---

The Arbiter iterates over the tuples of conflicting (and preceding) transactions until $\tau_p$ has been fully recovered or there are no more tuples to be processed (line 2). For each of those tuples, the Arbiter does the following: First, it verifies the approval signatures of the two transactions, checks that the two transactions precede $\tau_p$ and that they are not identical (lines 4-5). Then, it uses FindOverlap() based on bit strings $\tau_q$ of processed transactions to identify the equivocating statekeepers (line 6). Finally, it computes the amount that the merchant was deceived and subtracts it from the collateral of one of the statekeepers (lines 8-11).

We only deduct the missing funds from one of the equivocating statekeepers in each tuple, as the goal is to recoup the $\tau p_v$ in full. In another embodiment, the method can be modified to punish all the equivocating statekeepers. Recall that each merchant is responsible for ensuring that the collateral allocated by each statekeeper for them, suffices to cover the total value of pending payments approved by that statekeeper (line 10).

De-registration

Customers can leave the system at any point in time. The process is carried out in two steps, first by clearing the customer's pending transactions and subsequently by returning any remaining collateral. This two-step process allows enough time for any pending settlements to be processed before the collateral is returned to the customer.

The customer submits a clearance request that updates the clearance field C[c].cl to the current block number. At this point, the customer's account enters a clearance state that lasts for a predetermined number of blocks or period of time (e.g., 100 blocks, 24 hours etc). During this time, customer $c$ can no longer initiate purchases, but $-col_c$ can still be claimed as part of a settlement. Once the clearance is complete, the customer can withdraw any remaining collateral by submitting a withdrawal request. The Arbiter checks that enough time between the two procedures has elapsed and then returns the remaining $- col_c$ to customer $c$.

Security Analysis

In this section, we prove that a merchant who follows the decribed protocol to accept a fast payment is guaranteed to receive the full value of the payment (requirement R1).

Definitions. We use *BC* to denote all the transactions in the blockchain, and *BC[c]* to refer to the subset where *c* is the sender. We say that a customer's state is compatible with a transaction $\tau$ when $S_c$ include all of *c*'s pending transactions that precede $\tau$, while their total value does not exceed $col_c$.

Theorem 1.

Given a customer state $S_c$ that is compatible with a transaction $\tau$ approved by a majority of the statekeepers devices with sufficient collaterals, the merchant $\tau_m$ is guaranteed to receive the full value of $\tau$.

Proof. A transaction $\tau$ transfers funds from customer device *c* to merchant device *m*. Here, we use $-col_c$ to denote the value of the *c*'s collateral when $\tau$ was approved, and $-col'_c$ to denote the collateral's value at a later point in time. Note that $col'_c$ is potentially smaller than $-col_c$ as several settlement claims may have been processed in the meantime.

To prove Theorem 1, we consider both the case where $\tau$ is included in the blockchain *BC*, and the case it is not. In the former case, merchant *m* is guaranteed to receive the full payment value $\tau_v$, as the adversary cannot violate the integrity of the Arbiter smart contract or prevent its execution. Once transaction $\tau$ is in the blockchain, the Arbiter contract executes Record-and-Forward (Algorithm 1) that sends the full payment value $\tau_v$ to merchant device *m*.

In the latter case, the merchant device sends a settlement claim request that causes the Arbiter contract to execute Claim-Settlement (Algorithm 2). There are now two cases to consider: either $col'_c$ suffices to cover $\tau_v$ or it does not. In the first case, merchant *m* can recover all lost funds from $col''_c$. For this process, *m* needs to simply provide the approved $\tau$ and the list of transactions from customer *c* that preceded $\tau$ and are still pending. The Arbiter contract verifies the validity of the inputs and sends the payment value $\tau_v$ to merchant device *m* from $col''_c$. In the latter case ($\tau_v > col''_c$), merchant device *m* can still recoup any lost funds, as long as $S_c$ was compatible with $\tau$ and *m* followed the payment approval protocol and verified before payment acceptance that the approving statekeepers' remaining collaterals *R[s]* suffice to cover $\tau_v$ and all other pending transactions previously approved by the same statekeeper.

According to Lemma 1, if $\tau_v > col''_c$, then there are more than one approved transactions from customer c with the same index value $\tau_i$. As shown by Proposition 1, for this to happen, one or more statekeepers need to approve two transactions with the same index (i.e., equivocate). The arbiter contract can find the equivocating statekeepers by comparing the quorum bit vectors $\tau_q$ and $\tau'_q$ from the conflicting transaction tuples, and recoups all lost funds from their collaterals.

It is the responsibility of the merchant device *m* to verify that each statekeeper device who approves a payment has sufficient collateral remaining. Before payment acceptance, the merchant device verifies that the sum of all approved but pending payments and the current payment are fully covered by *R[s]* which is initially $col_s/k$ but can be reduced by previous settlement claims. Since one merchant cannot claim collateral allocated for another merchant, the merchant is guaranteed to be able recover the full payment value, even if one or more statekeepers equivocate to several merchants simultaneously.

*Lemmas.* We now provide proofs for Lemma 1 and Proposition 1 used above.

Lemma 1.

Let *Sc* be state of customer c that is compatible with a transaction $\tau$, if at any point $col''_c < \tau_v$ and $\tau$ has not been processed, then there exists an approved $\tau'$ such that $\tau' \notin Sc$, and $\tau'$ has the same index either with $\tau$ or a transaction in *Sc*.

Proof. Let $col_c$ be the funds left in the customer's collateral after a set of claims $\Pi$ were processed i.e., $col'_c = col_c - \sum\Pi$ Let's now assume that $col'_c < \tau_v$, but there is no $\tau'$ that (1) is not in $S_c$ and (2) has the same index with $\tau$ or with a transaction in $S_c$. In other words, let's assume that no two approved transactions have the same index i.

From $\tau_v > col_c$, it follows that $\sum\Pi + \tau_v > col_c$. By definition $\sum S_c + \tau_v \leq col_c$. Thus, it follows that:

$$\sum S_c + \tau_v < \sum \Pi + \tau_v \Rightarrow \sum S_c < \sum \Pi$$

From this, we derive that $\Pi \not\subset S_c$. Since $\Pi$ is not a subset of $S_c$, there is at least one transaction $\tau'' \in \Pi$ such that $\tau'' \notin S_c$ $S_c$ is compatible with $\tau$, and thus $S_c$ contains all the pending transactions up to $\tau_i$. As a result, a pending $\tau''$ that is not included in $S_c$ must have $\tau_i'$ greater than $\tau_i$. Note that if $\tau''$ is not pending, the Arbiter contract will not process the settlement claim (line 12 in Algorithm 3). Thus, $\tau_i < \tau_i'$.

According to Algorithm 3, any claim for $\tau'$ should include all transactions preceding $\tau'$ that are still pending. Since $\tau$ is pending and $\tau_i < \tau_i'$, the claim should also include $\tau$. However, Line 14 in Algorithm 3 ensures that enough funds are left in the customer's collateral to cover all the preceding-pending transactions. This covers $\tau$ too, and contradicts

our starting premise $\tau_v > col^{..}_c$. We have so far shown that:

(1) If $col^{.}_c < \tau_v$, then the arbiter processed a claim for a transaction $\tau'$ that is not included in $S_c$.

(2) The collateral will always suffice to cover $\tau$, even if other claims for transactions with greater index values (i.e., $\tau_i' > \tau_i$) are processed first.

From (1) and (2), it follows that $\tau_{i'} \leq \tau_i$

Proposition 1. For any two majority subsets $M_1 \subseteq S$ and $M_2 \subseteq S$, where $S$ is the set of all the statekeepers, it holds that M1 $\cap$ M2 $\neq$ 0.

Proof. The proof of this proposition follows directly from the Pidgeonhole principle (or Dirichlet's box principle) which states that if n items are put in m containers for $n > m$ then at least one container contains multiple items.

We will now describe alternative embodiments

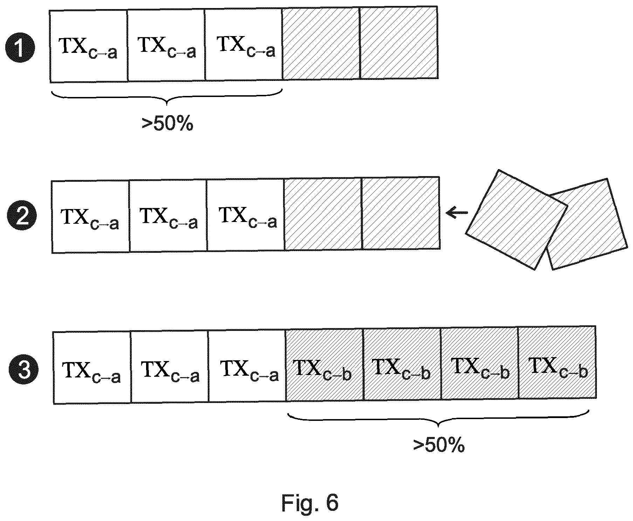

Dynamic merchants and statekeepers. While churning customers do not pose a threat to the security of the system, changes in the set of statekeepers may result in attacks. This attack enables a malicious customer to have two approved transactions with the same index value. As shown in Figure 6, initially the system features 5 statekeepers ($s_1$ ... $s_5$) and a merchant device who wants to have a transaction $\tau$ approved, reaches out to $s_1$, $s_2$ and $s_3$. Subsequently, two new statekeepers $s_6$ and $s_7$ join the system. The malicious customer c now issues another transaction $\tau'$, such that $\tau i = \tau'$. The merchant receiving $\tau'$ now queries a majority of the statekeepers (i.e., $s_4$, $s_5$, $s_6$ and $s_7$) and gets the transaction approved. At the final stage of the attack c issues another transaction that invalidates $\tau$ and $\tau'$ (e.g., a doublespend), while the malicious merchant quickly claims $\tau$ from the customer's collateral. Because of the way the arbiter processes claims (Line 12 in Algorithm 3), the honest merchant is now unable to claim $\tau \ni$ from $-col_c$. Moreover, none of the statekeepers equivocated and thus no funds can be recouped from their collateral.

Such attacks can be prevented in several ways. For example 1) by giving early notice to the merchants about the change (multistage registration), 2) waiting (a few minutes) until all past transactions are included in the blockchain.

Centralized system. While decentralization is one of the benefits of the method, there may be cases where having one central party is also acceptable. In this case, the merchants can appoint a single party to approve or reject payments. This simplifies our protocols as each payment requires only one approval query instead of several. However, if the central party is untrusted, it still has to deposit a collateral for the merchants to claim in case it equivocates. However, relying on a single party comes with drawbacks. In particular, such a setup adds a centralized layer on top of a fully decentralized blockchain, while the reliance on a single service provider will likely result in increased service fees.

Non statekeeping merchants

In the previous section, we discussed a fully centralized version the system that simplifies statekeeping. While this setup has several advantages, the liveness and quality of service of the deployment relies on the single party. An alternative solution that retains most of the centralization benefits while remaining decentralized (but not fully) is allowing non-statekeeping merchants. Merchants can join the system and decide if they want to deposit a collateral and perform statekeeping tasks or they simply want to be able to receive payments.

This allows merchants who choose not to statekeep to still make use of the method and enables the system to scale to higher number of merchants. To incentivize statekeeping, a small service fee could be paid by non-statekeeping merchants. to those who have allocated a statekeeping collateral.

Several merchants may be represented by a single statekeeping node. For example, instead of having small shops match the collateral of large chain stores, their association could maintain one node that performs the statekeeping for all of them and routes their to-be-approved payments to the rest of the statekeepers.

One pending transaction. Much of the complexity of the protocol comes from the fact that the pending transactions of a customer should never exceed in value the collateral. One possible way to reduce this complexity is by constraining the number of allowed pending transactions to 1. Such a setup allows the customers to conduct at most one transaction per block, and greatly simplifies the settlement process, as there are no pending transaction to be provided by the merchant. This embodiment may be preferable in cases where the customers are unlikely to perform several transactions within a short period of time. However, this is an additional assumption that may reduce the utility of the system in some cases. For example, a customer, who after checking out realizes that they forgot to buy an item, will have to wait until the pending transaction is confirmed.

Signature verification batching. While the computational cost of verifying an aggregated signature (i.e., two pairings) is negligible for a personal computer, this is not true for the Ethereum Virtual Machine, where a pairing operation is considerably more expensive than a group operation. The above described embodiments tackle this cost by having the arbiter verify signatures only in case of disputes. As an additional cost-reduction optimization, the arbiter can batch and check several signatures simultaneously; it can be shown that this roughly halfs the verification costs.

Dynamic Statekeepers' Consortiums.

So far we have considered only cases where customers joined and withdrew from the system. Similarly, one can imagine that statekeepers could decide to leave or new statekeepers may want to join an existing deployment. Such functionality can be facilitated by modifying through the registration and de-registration algorithms available for customers. However, while churning customers do not pose a threat to the security of the system, changes in the set of statekeepers may result in attacks.

Such an attack could enable a malicious customer to have two approved transactions with the same index value, by having them approved by other sets of statekeepers.

Such attacks can be prevented: 1) by giving early notice to the merchants about changes in the set (e.g., multistage registration), and 2) by waiting (preferably a few minutes) until all past transactions are finalized in the blockchain before/after every change.

Additional Features and Terminology

The proposed customer devices can rely for example on equipment such as smartphones, tablets, smart watches, personal computer or the like. They can also rely on low-cost, computationally-restrained (personal) cards, such as smart cards (also called chip card or integrated circuit card -ICC), i.e. a physical electronic authorization device, typically in form of a plastic credit card sized card.

The proposed merchant devices can rely for example on equipment such as computer, server, virtual server, point-of-sale equipment; alternatively they can also rely on smartphones, tablets, smart watches, personal computer or the like.

The proposed statekeeper devices can rely for example on equipment such as computer, server, virtual server, or point-of-sale equipment; alternatively they can also rely on smartphones, tablets, smart watches, personal computer or the like.

The Arbiter storage and computational module can rely for example on equipment such as computer, server, virtual server, and the like. For simplification, the Arbiter storage and computational module is sometimes simply referred to as Arbiter. One of his task is to execute a smart contract when some conditions are triggered, and to trigger the payments of the merchant.

A transaction or blockchain transaction is any event that may result in an update of the blockchain. A transaction may be represented by a message, a command, or any data structure than can be exchanged between devices or equipment, and/or stored in the blockchain. A transaction may be a financial transaction, or a non-financial transaction.

A blockchain may be thought as a distributed data structure for storing transactions, including programs such as programs embedding smart contracts.

A smart contract is a computer program, usually stored in a distributed way in a blockchain such as the Ethereum blockchain for example, whose execution is trackable and irreversible and which can be used for enforcing a contract between several parties. Smart contracts may be made self-executing and triggered by any event.

Depending on the embodiment, certain acts, events, or functions of any of the algorithms described herein can be performed in a different sequence, can be added, merged, or left out altogether (for example, not all described acts or events are necessary for the practice of the methods). Moreover, in certain embodiments, acts or events can be performed concurrently, for instance, through multi-threaded processing, interrupt processing, or multiple processors or processor cores or on other parallel architectures, rather than sequentially. In addition, different tasks or processes can be performed by different machines or computing systems that can function together.

The various illustrative logical blocks, modules, and algorithm steps described herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

The various illustrative logical blocks and modules described in connection with the embodiments disclosed herein can be implemented or performed by a machine, a microprocessor, a state machine, a digital signal processor (DSP), an application specific integrated circuit (ASIC), a FPGA, or other programmable logic device, discrete gate or transistor logic, discrete hardware components, or any combination thereof designed to perform the functions described herein. A hardware processor can include electrical circuitry or digital logic circuitry configured to process computer-executable instructions. In another embodiment, a processor includes an FPGA or other programmable device that performs logic operations without processing computer-executable instructions. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a device controller, or a computational engine within an appliance, to name a few.

"Servers" or "devices" can be implemented or performed by a physical machine, a virtual server, a general-purpose computer, multiple servers, cloud based computational resources, or other programmable components or modules providing the services and methods described.

Unless described otherwise, "links" and "connections" can be provided by any short-distance protocol, including near Field Communication (NFC), Bluetooth, ZigBee, etc, local protocol, such as WLAN, Ethernet, etc, or long-distance protocol, including for example Internet or cellular nertworks.

The steps of a method, process, or algorithm described in connection with the embodiments disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage. An example storage medium can be coupled to the processor such that the processor can read information from, and write information to, the storage medium. In the alternative, the storage medium can be integral to the processor. The storage medium can be volatile or nonvolatile. The processor and the storage medium can reside in an ASIC.

Conditional language used herein, such as, among others, "can," "might," "may," "e.g.," and the like, unless specifically stated otherwise, or otherwise understood within the context as used, is generally intended to convey that certain embodiments include, while other embodiments do not include, certain features, elements or states. Thus, such conditional language is not generally intended to imply that features, elements or states are in any way required for one or more embodiments or that one or more embodiments necessarily include logic for deciding, with or without author input or prompting, whether these features, elements or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

**Claims**

1. A data processing and telecommunication system for executing transactions, wherein the system includes a plurality of customer devices and a plurality of merchant devices all operable to communicate over the communication system, a decentralized blockchain (BC) operable as a ledger for storing transactions ($\tau$) between a merchant device ($m$) and a customer device ($c$), and a storage and computational module operable as an Arbiter for executing smart contracts,

   each customer devices ($c$) being operable to cause a customer collateral ($col_c$) to be controlled by said Arbiter,

   each customer device being further operable to send an intent (INTc) to a merchant device,

   the merchant devices ($m$) being programmed to execute the transaction after a verification of the customer collateral ($col_c$) deposited by a customer device having sent such an intent, but before the corresponding transaction is stored in said blockchain,

   each customer device being further operable to send to said Arbiter a transaction ($\tau$),

   the merchant devices being further arranged for storing accepted transactions to said blockchain,

   the Arbiter smart contract being programmed for forwarding the value of the transaction to the merchant once the transaction is added to the blockchain ($BC$) respectively for recovering that value from the customer's collateral ($col_c$) if a pending transaction does not get stored on the blockchain.

2. The system of claim1, wherein each merchant device is operable to forward the intent to a plurality of statekeeper devices,

   wherein each statekeeper device is operable to compare said intent with previously approved intents, and to approve the intent only if no intent with the same index is found,

   wherein each merchant device ($m$) is further arranged for verifying if a majority of statekeeper devices have approved the transaction, and to abort the transaction otherwise.

3. The system of one of the claims 1 or 2, wherein each merchant or statekeeper device is operable to cause a merchant collateral ($col_s$) to be deposited to an account controlled by said Arbiter.

**4.** A computer implemented method for executing transactions in a system including a blockchain (*BC*) operable as a ledger for storing transactions (τ) between a merchant device (m) and a customer device (c), comprising following steps:

   a customer device causes a customer collateral (*col$_c$*) to be controlled by smart contract executed by a storage and computational module operable as an Arbiter;
   the customer device sends an intent (INTc) to a merchant device,
   the customer collateral (*col$_c$*) of the customer is verified,
   only if the verification is positive, the transaction is executed by the merchant device before the transaction corresponding to the intent is stored in said blockchain
   the customer device sends to said Arbiter a transaction corresponding to said intent,

   the merchant device stores the accepted transaction to said blockchain,
   the smart contract is executed to trigger a transfer of the value of the transaction to the merchant once the transaction is added to the blockchain (*BC*) respectively to recover that value from the customer's collateral (*col$_c$*) if a pending transaction does not get stored on the blockchain.

**5.** The method of claim 4, wherein said merchant device forwards the intent to a plurality of statekeeper devices, wherein each statekeeper device compares said intent with previously approved intents, and approves the intent only if no intent with the same index is found, wherein said merchant device verifies if a majority of statekeeper devices have approved the transaction, and aborts the transaction otherwise.

**6.** The method of one of the claims 4 or 5, wherein each said merchant or statekeeper device deposits a merchant collateral (*col$_s$*) to an account controlled by said smart contract.

**7.** The method of one of the claims 4 to 6, wherein said intent is sent as a a digital message to the merchant device (*m*), and includes all the details of the transactions including sender, recipient, amount, index value of the transaction.

**8.** The method of one of the claims 4 to 7, said intent being sent with a consumer device state (*Sc*) that contains a list of already approved but still pending payments.

**9.** The method of one of the claims 4 to 8, wherein the merchant device verifies after reception of the intent that all the index values in an interval appear either in the blockchain (*BC*) or in the consumer device state (*S$_c$*) as approved but pending transactions.

**10.** The method of one of the claims 6 to 9, wherein upon receiving the approval from a majority of the statekeepers, the merchant device (m) checks that each approving statekeeper (s) has sufficient collateral remaining to cover the current payment value (τ$_v$).

**11.** The method of claim 10, comprising a step where the merchant aggregates the signatures (σ1,..., σ[(κ+1)/2]) of all approving statekeepers and sends to customer device (c) the resulting aggregate (A).

**12.** The method of one of the claims 4 to 11, wherein said Arbiter tries in case of double spending attempt to recoup the transaction value (τ$_p$) from the customer's collateral and, if this customer collateral does not suffice, claims the remaining amount from the collateral of the equivocating statekeeper.

**13.** The method of one of the claims 4 to 12, comprising a step of adding or removing statekeeper devices, and informing all merchants about the change.

**14.** The method of one of the claims 4 to 13, comprising a step of adding or removing statekeeper devices, and waiting at least two minutes before including new transactions into the blockchain.

Fig. 1

Fig. 2a

Fig. 2B

Fig. 2C

Fig. 3

EP 3 792 855 A1

Fig. 4

Fig. 5

Fig. 6

Europäisches
Patentamt

European
Patent Office

Office européen
des brevets

# EUROPEAN SEARCH REPORT

Application Number

EP 19 19 7048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEWIS GUDGEON ET AL: "SoK: Off The Chain Transactions", IACR, INTERNATIONAL ASSOCIATION FOR CRYPTOLOGIC RESEARCH , vol. 20190410:001850 3 April 2019 (2019-04-03), pages 1-17, XP061032040, Retrieved from the Internet: URL:http://eprint.iacr.org/2019/360.pdf [retrieved on 2019-04-03] * the whole document * | 1-14 | INV. G06Q20/02 G06Q20/40 |
| X | Rami Khalil ET AL: "NOCUST - A Securely Scalable Commit-Chain", , 15 February 2019 (2019-02-15), XP055675163, Retrieved from the Internet: URL:https://eprint.iacr.org/eprint-bin/getfile.pl?entry=2018/642&version=20190215:182502&file=642.pdf [retrieved on 2020-03-10] * the whole document * | 1-14 | |
| X | US 2019/139037 A1 (KHALIL RAMY ABDELMAGEED EBRAHIM [CH] ET AL) 9 May 2019 (2019-05-09) * abstract * * paragraph [0020] - paragraph [0119] * | 1-14 | TECHNICAL FIELDS SEARCHED (IPC) G06Q G07G |

-/--

The present search report has been drawn up for all claims

| Place of search | Date of completion of the search | Examiner |
|---|---|---|
| The Hague | 10 March 2020 | Lozza, Mario |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 19 7048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DZIEMBOWSKI STEFAN ET AL: "Perun: Virtual Payment Hubs over Cryptocurrencies", 2019 IEEE SYMPOSIUM ON SECURITY AND PRIVACY (SP), IEEE, 19 May 2019 (2019-05-19), pages 106-123, XP033617123, DOI: 10.1109/SP.2019.00020 [retrieved on 2019-09-12] * the whole document * | 1-14 | |
| X | ANDREW MILLER ET AL: "Sprites and State Channels: Payment Networks that Go Faster than Lightning", ARXIV.ORG, CORNELL UNIVERSITY LIBRARY, 201 OLIN LIBRARY CORNELL UNIVERSITY ITHACA, NY 14853, 19 February 2017 (2017-02-19), XP081280476, * the whole document * | 1-14 | |

TECHNICAL FIELDS
SEARCHED      (IPC)

The present search report has been drawn up for all claims

| Place of search | Date of completion of the search | Examiner |
|---|---|---|
| The Hague | 10 March 2020 | Lozza, Mario |

EPO FORM 1503 03.82 (P04C01)

## ANNEX TO THE EUROPEAN SEARCH REPORT
## ON EUROPEAN PATENT APPLICATION NO.

EP 19 19 7048

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2020

| Patent document cited in search report | Publication date | Patent family member(s) | Publication date |
|---|---|---|---|
| US 2019139037 A1 | 09-05-2019 | US 2019139037 A1<br>WO 2019092508 A2 | 09-05-2019<br>16-05-2019 |

EPO FORM P0459

For more details about this annex : see Official Journal of the European Patent Office, No. 12/82